# FASCICULE DE BREVET EUROPEEN

(11) **EP 0 754 582 B1**
(45) Date de publication et mention de la délivrance du brevet: **12.01.2000**
(21) Numéro de dépôt: 96401442.7
(22) Date de dépôt: 28.06.1996
(51) Int. Cl.: B60J 5/04

(54) **Dispositif de protection contre les chocs latéraux d'une porte de véhicule automobile**
Schutzvorrichtung gegen Seitenaufprall an der Fahrzeugtür
Protection device against side impact for vehicle door

(30) Priorité: 19.07.1995 FR 9508744
(43) Date de publication de la demande: 22.01.1997
(73) Titulaire: AUTOMOBILES PEUGEOT, 75116 Paris (FR); AUTOMOBILES CITROEN, 92200 Neuilly-sur-Seine (FR)
(72) Inventeur: Vandiere, Aymar, 92100 Boulogne Billancourt (FR)
(74) Mandataire: Thinat, Michel

(56) Documents cités:
- EP-A- 0 585 178
- EP-A- 0 642 940
- EP-A- 0 692 399
- DE-A- 4 421 095
- US-A- 3 887 227
- US-A- 4 796 946

## Description

La présente invention concerne un dispositif de protection contre les chocs latéraux d'une porte de véhicule automobile.

On connait un tel dispositif comprenant une barre de renfort latéral fixée sur la face interne de la porte en s'étendant sur pratiquement toute la largeur de celle-ci de façon à absorber un choc latéral.

Cependant, lors d'un choc latéral particulièrement violent, la barre de renfort peut fléchir en se cintrant avec enfoncement concomitant de la porte du véhicule à travers l'encadrement de porte, la porte risquant alors de heurter le conducteur ou le passager du véhicule.

Le document DE-A-4 421 095 décrit un dispositif de protection contre les chocs latéraux pour véhicule automobile, comprenant les caractéristiques énoncées dans le préambule de la revendication 1.

Ce dispositif connu a néanmoins pour inconvénient que la protubérance solidaire du montant central est constituée par une gâche faisant saillie du montant et pouvant accrocher certaines parties de vêtements du conducteur ou d'un passager du véhicule, voire même blesser celui-Ci.

La présente invention a pour but d'éliminer les inconvénients ci-dessus des dispositifs connus en proposant un dispositif comprenant les caractéristiques de la partie caractérisante de la revendication 1.

L'embouti du second montant central est réalisé sur une tôle formant ce montant qui est renforcé par un renfort interne, la doublure de porte et la tôle du second montant central ayant une épaisseur plus faible que celle du renfort latéral de porte et du renfort interne du second montant central.

Avantageusement, le renfort latéral est fixé au premier montant par une charnière d'articulation constituant l'une des articulations de la porte, laquelle charnière d'articulation est fixée sur un renfort du premier montant.

Les emboutis ont chacun une section transversale sensiblement en forme de trapèze.

Ces emboutis sont logés dans des parties de dégagement réalisées respectivement dans la doublure de porte et la tôle du second montant central de façon à permettre un déplacement longitudinal sans coincement de la porte en cas de choc frontal.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
La figure 1 est une vue en perspective représentant un dispositif de protection contre les chocs latéraux d'une porte de véhicule automobile conformément à l'invention.
La figure 2 est une vue en coupe suivant le plan horizontal contenant la ligne II-II de la figure 1.

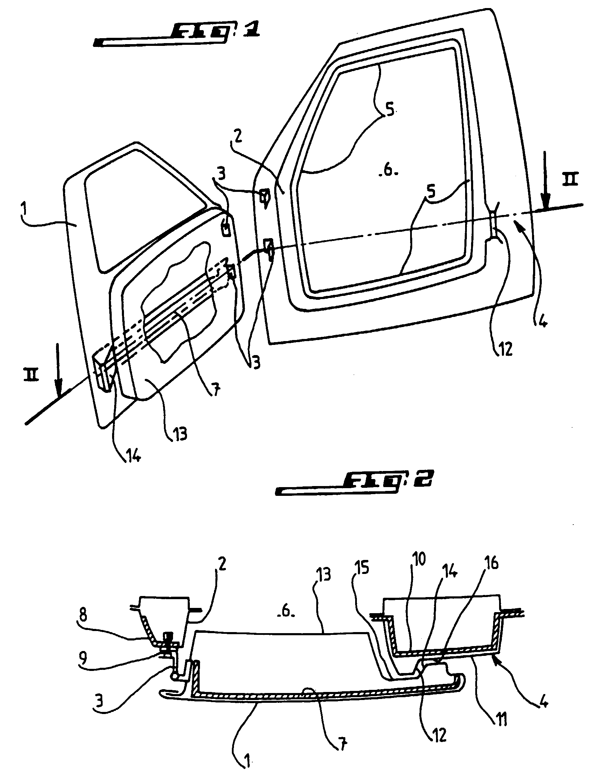

En se reportant aux figures 1 et 2, la référence 1 désigne une porte latérale avant de véhicule automobile montée articulée à l'une de ses extrémités sur le montant avant 2 de la caisse du véhicule par deux charnières d'articulation 3. En position de fermeture de la porte 1, son extrémité opposée aux charnières d'articulation 3 vient en appui sur un montant ou pied central 4 de la caisse du véhicule définissant avec le montant avant 2 l'encadrement 5 de la zone d'entrée de porte 6.

La porte 1 comprend une barre de renfort latéral 7 montée sur la face interne de la porte 1 et destinée à absorber des chocs latéraux de la porte 1.

Selon l'invention, la barre de renfort 7 est solidaire du montant avant 2, de préférence par l'intermédiaire d'une charnière d'articulation constituée par l'une des charnières d'articulation 3 de la porte 1, cette charnière étant suffisamment résistante pour empêcher la pénétration de la barre de renfort 7 au-delà de la zone d'entrée de porte 6. De préférence, la charnière d'articulation de la barre de renfort 7 au montant avant 2 est fixée sur un renfort 8 du montant 2 par l'intermédiaire de vis de fixation 9.

En position de fermeture de la porte 1 représentée en figure 2, la barre de renfort 7 a son extrémité opposée à celle articulée au montant avant 2 s'étendant au-delà de la zone d'entrée de port. 6 jusqu'à venir en recouvrement sur is montant central 4 qui comprend un renfort interne 10 sur lequel est fixée une tôle 11 comportant un embouti en forme de protubérance déformable 12 dont le rôle sera expliqué ultérieurement. Le renfort 10 est conçu de façon à ne pas se déformer de façon significative lors d'un choc latéral de la porte 1.

La doublure 13 de la porte 1, également en tôle déformable, comprend un embouti en forme de protubérance 14 do forme conjuguée à l'embouti 12 et se trouvant côte-à-côte avec l'embouti en position de fermeture de la ports 1. L'embouti 14 est situé approximativement au niveau de l'extrémité de la barre de renfort 7 opposée aux articulations 3. Les emboutis 12, 14 ont une forme propre à s'emboîter l'un dans l'autre en cas de choc latéral. De préférence, ces emboutis ont chacun une section transversale en forme de trapèze.

La tôle de la doublure de ports 13 et la tôle 11 du montant central 4 ont une épaisseur plus faible que celle de la barre de renfort 7 et du renfort interne 10 du montant 4.

Comme déjà mentionné précédemment, lors d'un choc latéral sur la porte 1, les emboutis en forme de protubérance 12, 14 viennent s'emboîter l'un dans l'autre sous la pression de la barre do renfort 7 et du fait que la tôle de la doublure 13 et la tôle 11 du montant central 4 ont une épaisseur plus faible que celle de la barre de renfort 7 et du renfort 10, ces emboutis vont se déformer et s'imbriquer l'un dans l'autre, empêchant de ce fait is glissement de la barre de renfort 7 dans la zone d'entrée de porte 6 et s'opposant ainsi à la déformation de la barre 7 vers une forme cintrée. En d'autres termes, l'extrémité de la barre de renfort 7 opposée à celle articulée au montant avant 2 est solidarisée au montant central 4. Dans ces conditions, la porte 1 est retenue à sa position de fermeture et ne peut ainsi pas passer à travers la zone d'entrée de porte 6. Le conducteur ou le passager se trouvant à côté de la porte 1 ne risque pas d'être heurté par cette dernière.

Avantageusement, les emboutis en forme de protubérance 12, 14 sont logés dans des parties de dégagement 15, 16 réalisées respectivement dans la doublure de porte 13 et la tôle 11 du montant central 4 lors de la formation des emboutis. Ces parties de dégagement permettent un déplacement longitudinal de la porte 1 lors d'un choc frontal, évitant ainsi le coincement de cette porte.

## Revendications

1. Dispositif de protection contre des chocs latéraux pour véhicule automobile, comprenant un renfort latéral (7) de forme allongée monte sur la face interne d'une porte latérale (1) de véhicule automobile, articulée à l'une de ses extrémités sur un premier montant (2) de la caisse du véhicule et venant en appui à son extrémité opposée sur un second montant central (4) de la caisse délimitant avec le premier montant (2) la zone d'entrée de porte (6), le renfort latéral (7), en position de fermeture de la porte (1), ayant une extrémité solidaire du premier montant (2) et son extrémité opposée s'étendant au-delà de la zone d'entrée de porte (6) en faisant face au second montant central (4) et comportant un moyen (14) permettant au renfort latéral (7) d'être solidarisé au second montant central (4) sous l'effort généré par un choc latéral, le moyen (14) permettant de solidariser le renfort latéral (7) au second montant central (4) comprenant une protubérance (14) située au niveau de l'extrémité opposée du renfort latéral (7) et coopérant avec une protubérance (12) de forme conjuguée du second montant central (4), caractérisé en ce que la protubérance (14) du renfort latéral (7) est un embouti déformable de la doublure de porte (13) et en ce que la protubérance (12) du second montant central (4) est un embouti déformable, de façon que lors du choc latéral, les deux emboutis (12, 14) se déforment et s'imbriquent l'un dans l'autre pour retenir l'extrémité opposée du renfort latéral (7).

2. Dispositif selon la revendication 1, caractérisé en ce que l'embouti (12) du second montant central (4) est réalisé sur une tôle (11) formant ce montant qui est renforcé par un renfort interne (10) et en ce que la doublure de porte (13) et la tôle (11) du second montant central (4) ont une épaisseur plus faible que celle du renfort latéral de porte (7) et du renfort interne (10) du second montant central (4).

3. Dispositif selon la revendication 1 ou 2, caractérisé en ce que le renfort latéral (7) est fixé au premier montant (2) par une charnière d'articulation (3) constituant l'une des articulations de la porte (1), laquelle charnière d'articulation (3) est fixée sur un renfort (8) du premier montant (2).

4. Dispositif selon l'une des revendications précédentes, caractérisé en ce que les emboutis (12, 14) ont chacun une section transversale sensiblement en forme de trapèze.

5. Dispositif selon l'une des revendications précédentes, caractérisé en ce que les emboutis (12, 14) sont logés dans des parties de dégagement (15, 16) réalisées respectivement dans la doublure de porte (13) et la tôle (11) du second montant central (4) de façon à permettre un déplacement longitudinal sans coincement de la porte (1) en cas de choc frontal.

## Claims

1. Protection device against side impacts for a motor vehicle including an elongated side reinforcement (7) mounted on the internal face of a side door (1) of a motor vehicle joined at one of its ends to a first pillar (2) of the body of the vehicle and being in support at its opposing end on a second central pillar (4) of the body delimiting with the first pillar (2) the door entrance zone (6), the side reinforcement (7) in a door closing position (1) having one end integral with the first pillar (2) and its opposing end extending beyond the door entrance zone (6) by being opposite the second central pillar (4) and comprising a device (14) able to render the side reinforcement (7) integral with the second central pillar (4) under the force generated by a side impact, the device (14) able to render the side reinforcement (7) integral with the second central pillar (4) including a protuberance (14) situated at the level of the opposing end of the side reinforcement (7) and co-operating with a conjugated shaped protuberance (12) of the second central pillar (4), characterised in that the protuberance (14) of the side reinforcement (7) is a deformable depression of the door panel (13) and in that the protuberance (12) of the second central pillar (4) is a deformable depression so that if a side impact occurs, the two depressions (12, 14) deform and overlap with respect to each other so as to retain the opposing end of the side reinforcement (7).

2. Device according to claim 1, characterised in that the depression (12) of the second central pillar (4) is embodied on a steel plate (11) forming this pillar which is reinforced by an internal reinforcement (10) and in that the thickness of door panel (13) and the steel plate (11) of the second central pillar (4) are smaller than that of the door side reinforcement (7) and the internal reinforcement (10) of the second central pillar (4).

3. Device according to claim 1 or 2, characterised in that the side reinforcement (7) is fixed to the first pillar (2) by a joint hinge (3) constituting one of the joints of the door (1), said joint hinge (3) being secured to a reinforcement (8) of the first pillar (2).

4. Device according to one of the preceding claims, characterised in that each of the depressions (12, 14) has an approximately trapezoid-shaped cross section.

5. Device according to one of the preceding claims, characterised in that the depressions (12, 14) are housed inside clearance sections (15, 16) embodied respectively in the door panel (13) and the steel plate (11) of the second central pillar (4) so as to allow the door (1) to move longitudinally without jamming should a frontal impact occur.

## Patentansprüche

1. Schutzvorrichtung gegen Seitenaufprall an der Fahrzeugtür, eine seitliche Verstärkung (7) in länglicher Form umfassend, auf der Innenseite einer Seitentür (1) des Fahrzeugs aufgebracht, die an einer ihrer Äußerste Grenzeen auf einer ersten Stütze (2) des Gehäuses artikuliert ist und sich an ihrer gegenüberliegenden Äußerste Grenze auf eine zweiten zentrale Stütze (4) des Gehäuses stützt, die mit der ersten Stütze (2) den Eingangsbereich der Tür (6) abgrenzt, wobei die seitliche Verstärkung (7) bei geschlossener Stellung der Tür (1) eine mit der ersten Stütze (2) lest verbundene Äußerste Grenze hat und ihre gegenüberliegende Äußerste Grenze sich über den Eingangsbereich der Tür (6) erstreckt und dabei der zweiten zentralen Stütze (4) gegenüberliegt und ein Mittel (14) umfaßt, das es der seitlichen Verstärkung (7) erlaubt, unter der von einem seitlichen Aufprall hervorgerufenen Belastung fest mit der zweiten zentralen Stütze (7) verbunden zu sein, wobei das Mittel (14) es erlaubt, die eine sich auf der Höhe des gegenüberliegenden äußeren Endes befindende Ausstülpung (14) umfassende mit einer in einer der zweiten zentralen Stütze (14) zugeordneten Form Ausstülpung (12) zusammenwirkenden seitliche Verstärkung (7) mit der zweiten zentralen Stütze (4) fest zu verbinden, dadurch gekennzeichnet, daß die Ausstülpung der seitlichen Verstärkung (7) ein verformbares Stulpblech der Innenverkleidung der Tür (13) ist und daß die Ausstülpung (12) der zweiten zentralen Stütze (4) ein verformbares Stulpblech ist, der Art, daß sich bei einem seitlichen Aufprall die beiden Stulpbleche (12, 14) verformen und ineinander verzahnen, um das gegenüberliegende äußere Ende der seitlichen Verstärkung (7) zurückzuhalten.

2. Vorrichtung gemäß Anspruch 1, dadurch gekennzeichnet, daß das Stulpblech (12) der zweiten zentralen Stütze (4) auf einem Blech (11) realisiert ist, das diese Stütze bildet, die durch eine innere Verstärkung (10) verstärkt wird und daß die Verkleidung der Tür (13) und das Blech (11) der zweiten zentralen Stütze (4) eine geringere Stärke haben als die der seitlichen Verstärkung der Tür (7) und der inneren Verstärkung (10)der zweiten zentralen Stütze (4).

3. Vorrichtung gemäß Anspruch 1 oder 2, dadurch gekennzeichnet, daß die seitliche Verstärkung (7) auf der ersten Stütze (2) durch ein artikuliertes Scharnier (3) befestigt ist, das eines der Gelenke der Tür (1) bildet, wobei besagtes artikuliertes Scharnier (3) auf einer Verstärkung (8) der ersten Stütze (2) befestigt ist.

4. Vorrichtung gemäß einem der vorherigen Ansprüche, dadurch gekennzeichnet, daß die Stulpbleche (12, 14) jedes einen deutlich trapezförmigen querliegenden Abschnitt haben.

5. Vorrichtung gemäß einem der vorherigen Ansprüche, dadurch gekennzeichnet, daß die Stulpbleche (12, 14) in den freigelassenen Teilen (15, 16) untergebracht sind, die jeweils in der Verkleidung der Tür (13) und dem Blech (11) der zweiten zentralen Stütze (4) derart realisiert sind, daß bei einem frontalen Aufprall eine Bewegung in Längsrichtung ohne Verklemmung der Tür ermöglicht wird.
